Europäisches Patentamt

European Patent Office

Office européen des brevets

(11) Numéro de publication: **0 061 812**
**A1**

(12) # DEMANDE DE BREVET EUROPEEN

(21) Numéro de dépôt: **82200360.4**

(22) Date de dépôt: **24.03.82**

(51) Int. Cl.³: **H 04 M 9/08**

(30) Priorité: **01.04.81 FR 8106530**

(43) Date de publication de la demande:
**06.10.82 Bulletin 82/40**

(84) Etats contractants désignés:
**BE CH DE FR GB IT LI SE**

(71) Demandeur: **TELECOMMUNICATIONS RADIOELECTRIQUES ET TELEPHONIQUES T. R. T.**
**88, rue Brillat Savarin**
**F-75013 Paris(FR)**

(72) Inventeur: **Duong, Tuan Kiet**
**SOCIETE CIVILE S.P.I.D. 209 rue de l'Université**
**F-75007 Paris(FR)**

(72) Inventeur: **Lefort, Emmanuel**
**SOCIETE CIVIELE S.P.I.D. 209 rue de l'Université**
**F-75007 Paris(FR)**

(72) Inventeur: **Bellanger, Maurice Georges**
**SOCIETE CIVILE S.P.I.D. 209 rue de l'Université**
**F-75007 Paris(FR)**

(74) Mandataire: **Tissot, Jean et al,**
**Société Civile S.P.I.D. 209, rue de l'Université**
**F-75007 Paris(FR)**

(54) **Agencement de transducteurs acoustiques et utilisation de cet agencement dans un poste téléphonique "mains libres".**

(57) Pour empêcher la naissance d'oscillations par couplage acoustique entre un émetteur et un récepteur d'ondes acoustiques, cet émetteur et ce récepteur sont constitués par deux réseaux de transducteurs acoustiques. La disposition des transducteurs dans chaque réseau, la phase et l'amplitude des signaux fournis aux transducteurs (10) à (15) du réseau de l'émetteur et des signaux fournis à un circuit additionneur (41) en provenance des transducteurs (25) à (30) du réseau du récepteur sont déterminées pour que, dans la bande de fréquences où les oscillations sont susceptibles de se produire, le rayonnement du réseau de l'émetteur et la directivité du réseau du récepteur, présentent une valeur nulle au moins dans une direction; la disposition des deux réseaux l'un par rapport à l'autre est telle que les directions de valeur minimale de rayonnement et de directivité correspondent aux directions des couplages les plus importants entre les transducteurs des deux réseaux.

Application: Téléphone "mains libres".

FIG.5

FIG.6

EP 0 061 812 A1

1

AGENCEMENT DE TRANSDUCTEURS ACOUSTIQUES ET UTILISATION DE CET AGENCEMENT
DANS UN POSTE TELEPHONIQUE "MAINS LIBRES".

L'invention concerne un agencement d'un émetteur et
d'un récepteur d'ondes acoustiques couplés par voie électrique, cet agencement étant destiné à empêcher la naissance d'oscillations par couplage
acoustique.

Un risque d'auto-oscillations existe par exemple dans
les postes téléphoniques dits "mains libres". Dans ces postes munis d'un
haut-parleur et d'un microphone relativement proches l'un de l'autre, il
peut se produire, si aucune précaution n'est prise, des auto-oscillations intempestives dans la boucle comprenant le trajet acoustique entre
le haut-parleur et le microphone et le trajet électrique résultant d'un
découplage forcément imparfait entre la voie reliée au haut-parleur et la
voie reliée au microphone. Pour éviter ces auto-oscillations produisant un
sifflement rendant pratiquement impossible l'usage du poste téléphonique,
les procédés connus jusqu'à présent consistent à agir sur la partie électrique de la boucle. Ces procédés connus sont de deux types généraux mentionnés dans l'article "Adaptative Filters to improve Loudspeaker telephone" de South et Al, paru dans Electronics Letters, 11 octobre 1979, Vol.15,
n° 21, pages 673-674. Dans un premier procédé connu, pour diminuer le gain
électrique dans la boucle et donc empêcher la naissance des oscillations,
un affaiblissement est inséré dans la voie du haut-parleur ou dans la voie
du microphone selon qu'un signal de parole est présent ou non dans la voie
du microphone. Outre une certaine complication, ce procédé rend la conversation peu naturelle, notamment parce qu'il est difficile d'interrompre
un interlocuteur en train de parler devant le microphone. Dans le deuxième procédé connu basé sur les techniques d'annulation d'écho, on utilise
deux filtres adaptatifs qui sont commandés pour former des répliques des trajets électrique et acoustique de la boucle où prennent naissance les oscillations, les signaux fournis par ces filtres étant soustraits des signaux apparaissant dans les deux voies. Ce deuxième procédé a l'inconvénient d'une grande complexité.

La présente invention a pour but d'empêcher la naissance d'oscillations dans une boucle électro-acoustique comprenant un émetteur acoustique et un récepteur acoustique, en évitant les inconvénients des procédés connus que l'on vient de rappeler.

L'idée de base de l'invention est d'opérer un découplage acoustique, sans avoir à éloigner l'émetteur et le récepteur acoustiques, ce qui serait inacceptable par exemple dans le cas d'un poste téléphonique "mains libres", en utilisant comme émetteur et récepteur deux réseaux de haut-parleurs et de microphones procurant respectivement des diagrammes de rayonnement et de directivité tels qu'avec une disposition convenable de ces deux réseaux, on obtienne le découplage désiré.

Conformément à l'invention, l'émetteur et le récepteur d'ondes acoustiques sont constitués par deux réseaux de transducteurs acoustiques, la disposition des transducteurs dans chaque réseau, la phase et l'amplitude des signaux fournis aux transducteurs du réseau de l'émetteur et des signaux fournis à un circuit additionneur en provenance des transducteurs du réseau du récepteur étant déterminées pour que, dans la bande de fréquences où les oscillations sont susceptibles de se produire, le rayonnement du réseau de l'émetteur et la directivité du réseau du récepteur présentent chacun une valeur minimale sensiblement nulle au moins dans une direction, la disposition des deux réseaux l'un par rapport à l'autre étant telle que les directions de valeur minimale de rayonnement et de directivité correspondent sensiblement aux directions des couplages les plus importants entre les transducteurs des deux réseaux.

De préférence, la disposition des deux réseaux de transducteurs l'un par rapport à l'autre est telle que le centre de rayonnement du réseau de l'émetteur est sensiblement confondu avec le centre de directivité du réseau du récepteur.

Dans plusieurs modes préférés de réalisation de l'agencement de l'invention, on utilise dans chaque réseau, des transducteurs alignés.

Ainsi, le premier des deux réseaux peut être constitué par un nombre pair de transducteurs d'un type (haut-parleurs ou microphones), disposés sur une ligne x'x symétriquement par rapport à un point O, les transducteurs situés d'un même côté du point O étant séparés par la distance d, les signaux appliqués aux transducteurs (ou fournis par les transducteurs) étant pondérés à l'aide de circuits de pondération de telle façon que le rayonnement (ou la directivité) du réseau de transducteurs soit nul dans les directions de lignes passant par le point O et perpendiculaires à la ligne x'x.

A ce premier réseau on associe de préférence un deuxième réseau qui est constitué par un nombre pair de transducteurs de l'autre type, disposés symétriquement par rapport audit point O sur une ligne y'y perpendiculaire à ladite ligne x'x, les transducteurs situés d'un même côté du point O étant séparés par la distance d, les signaux appliqués aux transducteurs (ou fournis par les transducteurs) étant pondérés au moyen de circuits de pondération de telle façon que le rayonnement (ou la directivité) du réseau de transducteurs disposés sur la ligne y'y soit nul dans les directions de lignes passant par le point O et perpendiculaires à la ligne y'y.

Comme on l'expliquera par la suite, pour la détermination pratique des réseaux de transducteurs utilisés dans l'invention et ayant des diagrammes de rayonnement ou de directivité donnés, il peut être intéressant d'utiliser une correspondance avec des filtres numériques destinés à produire une fonction de transfert donnée.

On peut enfin remarquer que l'arrangement de transducteurs acoustiques de l'invention, qui supprime ou réduit les couplages acoustiques entre émetteur acoustique et récepteur acoustique n'est pas incompatible avec les dispositifs connus servant à réduire le couplage électrique entre cet émetteur et ce récepteur et peut permettre de simplifier notablement ces dispositifs.

Un poste téléphonique "mains libres" peut être réalisé pratiquement avec un nombre réduit (quelques unités) de transducteurs peu encombrants, simples, robustes et bon marché, tels que des microphones à électrets et des haut-parleurs magnétiques.

La description suivante en regard des dessins annexés, le tout donné à titre d'exemple, fera bien comprendre comment l'invention peut être réalisée.

La figure 1 montre différents trajets entre un haut-parleur et un microphone, correspondant à plusieurs types de couplage acoustique.

La figure 2 représente un exemple d'un diagramme de rayonnement de haut-parleur et d'un diagramme de directivité de microphone.

La figure 3 donne l'allure des diagrammes de rayonnement et de directivité réalisés par des réseaux de transducteurs acoustiques conformément à l'invention, pour éviter les couplages acoustiques produisant des auto-oscillations.

La figure 4 représente en 4a un diagramme de rayonnement ou de directivité correspondant à la fonction de transfert d'un filtre passe haut, montrée en 4b ; en 4c sont montrés la réponse impulsionnelle de ce filtre et les coefficients du filtre numérique correspondant.

La figure 5 représente un réseau de haut-parleurs permettant de réaliser le diagramme de rayonnement montré sur la figure 4a.

La figure 6 représente un réseau de microphones permettant de réaliser le diagramme de directivité montré sur la figure 4a.

Les figures 7 et 8 représentent deux variantes d'un agencement du réseau de haut-parleurs de la figure 5 avec le réseau de microphones de la figure 6.

La figure 9 représente en 9a un diagramme de rayonnement ou de directivité correspondant à la fonction de transfert d'un filtre passe-bas, montrée en 9b ; en 9c sont montrés la réponse impulsionnelle de ce filtre et les coefficients du filtre numérique correspondant.

La figure 10 représente un réseau de microphones permettant de réaliser le diagramme de directivité montré sur la figure 9a.

La figure 11 représente un agencement du réseau de haut-parleurs de la figure 5 avec le réseau de microphones de la figure 10.

La figure 12 représente un agencement de deux haut-parleurs et de deux microphones disposés dans un même plan sur deux lignes perpendiculaires.

La figure 13 représente un agencement de deux haut-parleurs alignés avec trois microphones et un agencement de trois haut-parleurs alignés avec deux microphones.

La figure 14 représente un agencement de deux haut-parleurs alignés avec un microphone et un agencement de deux microphones alignés avec un haut-parleur.

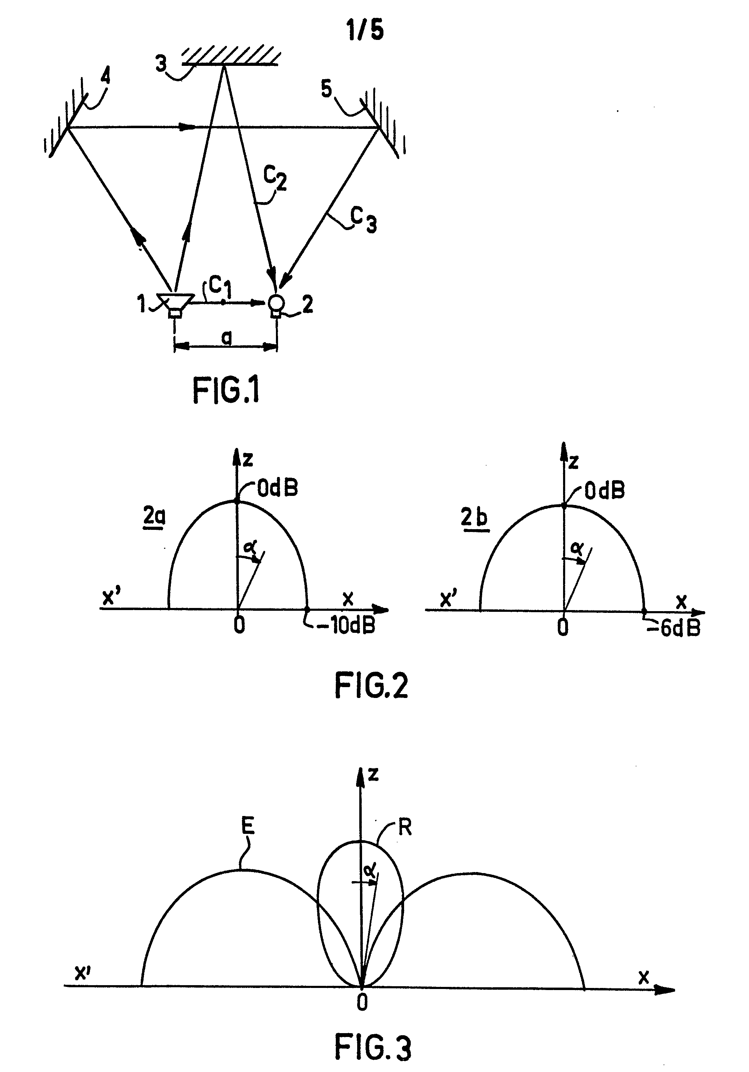

La figure 1 est destinée à montrer les différents types de couplages acoustiques existant entre un haut-parleur 1 et un microphone 2 disposés côte à côte à une faible distance a, comme par exemple dans un poste téléphonique "mains libres". Dans le couplage direct, le signal acoustique émis par le haut-parleur 1 atteint le microphone 2, en suivant le trajet direct représenté par la ligne $C_1$. Dans le couplage par réflexion unique, le signal acoustique émis par le haut-parleur atteint le microphone après une seule réflexion sur une paroi 3 située sensiblement en face de ces transducteurs, en suivant le trajet représenté par la ligne brisée $C_2$. Enfin on peut avoir des couplages par réflexions multiples, par exemple un couplage par deux réflexions sur les deux parois 4 et 5, le signal acoustique suivant alors le trajet rerprésenté par la ligne brisée $C_3$.

On peut comparer ces types de couplage dans le cas des diagrammes donnés à titre d'exemple en 2a et 2b sur la figure 2, respectivement pour un haut-parleur et un microphone ; ces deux diagrammes sont construits pour la même fréquence, 1000 Hz par exemple, dans le demi-plan défini par l'axe x'Ox et le demi-axe Oz. Comme l'indique le diagramme 2a, l'intensité sonore rayonnée par le haut-parleur considéré est maximale pour la direction Oz telle que $\alpha = 0°$. Pour les directions opposées Ox et Ox' telles que $\alpha = \pm 90°$, l'intensité sonore rayonnée est au niveau – 10 dB par rapport au niveau supposé de 0 dB pour la direction Oz. Comme l'indique le diagramme 2b, pour le microphone considéré, les niveaux correspondants sont – 6 dB pour les directions Ox, Ox' par rapport au niveau maximal 0 dB pour la direction Oz. En prenant comme référence l'affaiblissement du signal acoustique qui se produirait entre le haut-parleur et le microphone mis face à face à la distance a, on peut déduire que pour le couplage direct $C_1$, il se produit un affaiblissement $Af_1 = (10 + 6)dB = 16$ dB. Pour le couplage de type $C_2$, en tenant compte du fait que l'affaiblissement est proportionnel à la distance, en supposant que le trajet $C_2$ vaut 10 a et qu'une réflexion produit un affaiblissement de 3 dB, l'affaiblissement est $Af_2 \simeq (20 + 3)dB = 23$ dB. Pour le couplage de type $C_3$ avec deux réflexions, en supposant que le trajet $C_3$ vaut 20 a et en comptant pour 5 dB l'affaiblissement de directivité, on obtient un af-

faiblissement $Af_3 \simeq (26 + 6 + 5)dB = 37$ dB. Il apparaît ainsi que les couplages les plus importants dans une disposition classique d'un haut-parleur et d'un microphone disposés côte à côte, sont les couplages de type $C_1$ et $C_2$. Ce sont ces deux couplages qu'il convient d'éliminer en priorité pour éviter la naissance d'auto-oscillations.

Selon l'invention, pour supprimer ou atténuer des couplages acoustiques, on utilise comme émetteur et récepteur d'ondes acoustiques deux réseaux de transducteurs acoustiques. La disposition des transducteurs dans chaque réseau, la phase et l'amplitude des signaux électriques fournis à ces transducteurs ou engendrés par ces transducteurs sont déterminées de telle manière que, dans la bande de fréquences où les oscillations sont susceptibles de se produire, le rayonnement du réseau de l'émetteur acoustique et la directivité du réseau du récepteur acoustique présentent chacun une valeur minimale sensiblement nulle au moins dans une direction, la disposition d'un réseau par rapport à l'autre réseau étant telle que les directions de valeurs minimales de rayonnement et de directivité correspondent sensiblement aux directions des couplages les plus importants entre les transducteurs des deux réseaux. La figure 3 montre une allure de diagrammes de rayonnement et de directivité tracés dans le demi-plan (Oz, x'Ox) et convenant pour supprimer dans ce demi-plan les couplages direct et par réflexion de face définis plus haut. Sur la figure 3 le diagramme de rayonnement du réseau de l'émetteur est représenté par la courbe E et le diagramme de directivité du réseau du récepteur est représenté par la courbe R. D'après ces diagrammes, le rayonnement du réseau de l'émetteur est nul dans la direction Oz ($\alpha = 0$) pour laquelle la directivité du réseau du récepteur est maximale, tandis que cette directivité est nulle dans les directions Ox, Ox' ($\alpha = \pm 90^\circ$) pour lesquelles le rayonnement du réseau de l'émetteur est également maximal. Il est en outre avantageux, comme c'est le cas pour les diagrammes de la figure 3, que le rayonnement du réseau de l'émetteur soit négligeable dans les directions à l'intérieur d'un secteur entourant la direction Oy et que la directivité du réseau du récepteur soit négligeable dans les directions de secteurs du demi-plan, adjacents aux directions Ox et Ox'. Dans l'exemple de la figure 3, la disposition des deux réseaux l'un par rapport à l'autre est telle que le centre de rayonnement de l'émetteur est confondu avec le centre de directivité du récepteur au point O. Il est alors clair qu'avec des réseaux produisant ces diagrammes dans le demi-plan considéré, le couplage acoustique direct est complètement supprimé, puisque le récepteur acoustique a une directivité nulle dans les directions $\alpha = \pm 90°$ de ce couplage direct ; le couplage par réflexion unique de face est également complètement supprimé puisque l'émetteur acoustique a un rayonnement nul dans la direction $\alpha = 0$ de ce couplage par réflexion de face. En outre, les couplages par réflexion multiples sont très atténués quand ils correspondent à des secteurs de rayonnement ou de directivité négligeables.

Les mêmes propriétés de découplage peuvent être obtenues en inversant les deux diagrammes de la figure 3, ce qui signifie que l'on peut aussi utiliser un réseau d'émetteur ayant un rayonnement représenté par le diagramme R et un réseau de récepteur ayant une directivité représentée par le diagramme E. Par ailleurs les centres de rayonnement et de directivité des deux réseaux émetteur et récepteur ne sont pas nécessairement confondus comme l'indique la figure 3. Il peut être par exemple plus avantageux dans certains cas que le centre de directivité du récepteur représenté par le diagramme R soit disposé sur l'axe Oz à une certaine distance du point O. Enfin on peut remarquer ici que la forme et la disposition des deux diagrammes représentés sur la figure 3 conviennent pour supprimer les couplages acoustiques direct et par réflexion de face qui sont généralement les plus gênants. Toutefois dans des configurations particulières ou si les réseaux émetteur et récepteur sont construits avec des transducteurs ayant des propriétés particulières de rayonnement et de directivité, il peut être intéressant de supprimer plus particulièrement d'autres couplages acoustiques se produisant dans des directions différentes des directions perpendiculaires Ox et Oz. Dans ce cas, les réseaux émetteur et récepteur seront adaptés et/ou disposés l'un par rapport à l'autre pour avoir des diagrammes de rayonnement et de directivité nuls dans les directions où se produisent les couplages acoustiques les plus gênants.

Pour fixer les idées, on se placera par la suite dans le cas le plus fréquent où les couplages les plus importants se produisent dans deux directions perpendiculaires et où, pour supprimer ces couplages, le rayonnement du réseau de l'émetteur doit être nul dans une de ces directions et la directivité du réseau du récepteur doit être nulle dans l'autre direction. On va maintenant décrire des réseaux de transducteurs ayant des diagrammes de rayonnement et de directivité permettant de satisfaire à ces exigences. Une contrainte importante à prendre en compte dans la conception de ces réseaux est la déformation des diagrammes de rayonnement et de directivité avec la fréquence. Par exemple, dans le cas d'un poste téléphonique "mains libres", la bande de fréquences à prendre en compte est la bande 300-3400 Hz des signaux téléphoniques.

Pour la conception de ces réseaux de transducteurs acoustiques, on peut utiliser les principes bien connus qui servent de base à la réalisation des réseaux d'antennes radioélectriques. Ainsi on sait qu'il est possible d'obtenir un diagramme de rayonnement déterminé avec un réseau d'antennes ayant une disposition convenable et alimentées par des signaux d'amplitude et de phase convenables ; de la même manière il est possible d'obtenir un diagramme de rayonnement déterminé avec un réseau de haut-parleurs convenablement disposés et alimentés des signaux d'amplitude et de phase convenables. Il est aussi possible d'obtenir un diagramme de directivité déterminé avec un réseau de microphones convenablement disposés et dont les signaux de sortie sont additionnés avec une phase et une amplitude convenables. En disposant alors convenablement l'un par rapport à l'autre le réseau de haut-parleurs et le réseau de microphones on peut obtenir le découplage acoustique désiré.

Pour définir pratiquement les paramètres d'un réseau de haut-parleurs ou de microphones ayant un diagramme de rayonnement donné, on peut s'aider des considérations suivantes. D'une manière générale, la théorie du rayonnement enseigne que le diagramme de rayonnement d'une source plane est donné par la transformée de Fourier bidimensionnelle de la répartition des puissances rayonnées par chaque point de cette source : voir par exemple à ce sujet l'ouvrage de A.Angot, Compléments de Mathématiques, 5° Edition, 1965, chapitre 2, pages 92-93. Inversement cette répartition de puissances est fournie par transformation de Fourier inverse du diagramme de rayonnement. En considérant les symétries, on peut se limiter au cas d'une source de rayonnement linéaire et d'un diagramme de rayonnement plan pour lesquels s'applique de façon analogue la transformée de Fourier classique à une dimension. Enfin les haut-parleurs et microphones envisagés pour la réalisation des réseaux de transducteurs acoustiques sont de très faibles dimensions et par suite sont assimilables en première approximation à des sources et à des récepteurs de rayonnement ponctuels. Pour la détermination de réseaux de ces transducteurs ponctuels, il est très avantageux de faire appel à la théorie des filtres numériques. A l'espace des temps échantillonné correspond la ligne sur laquelle sont disposés les transducteurs acoustiques. A la valeur d'échan-- tillons régulièrement espacés de la réponse impulsionnelle d'un filtre correspond la valeur de signaux alimentant des haut-parleurs régulièrement espacés sur une ligne ou la valeur de signaux provenant de microphones régulièrement espacés sur une ligne et destinés à être additionnés. Enfin, à la réponse en fréquence d'un filtre correspond un diagramme de rayonnement du réseau de haut-parleurs ou un diagramme de directivité du réseau de microphones, la fréquence f intervenant pour définir la réponse en fréquence du filtre étant liée à l'angle α intervenant pour définir les diagrammes des réseaux de transducteurs et à la longueur d'onde λ des vibrations acoustiques par la relation :

$$f = \frac{\sin \alpha}{\lambda}$$

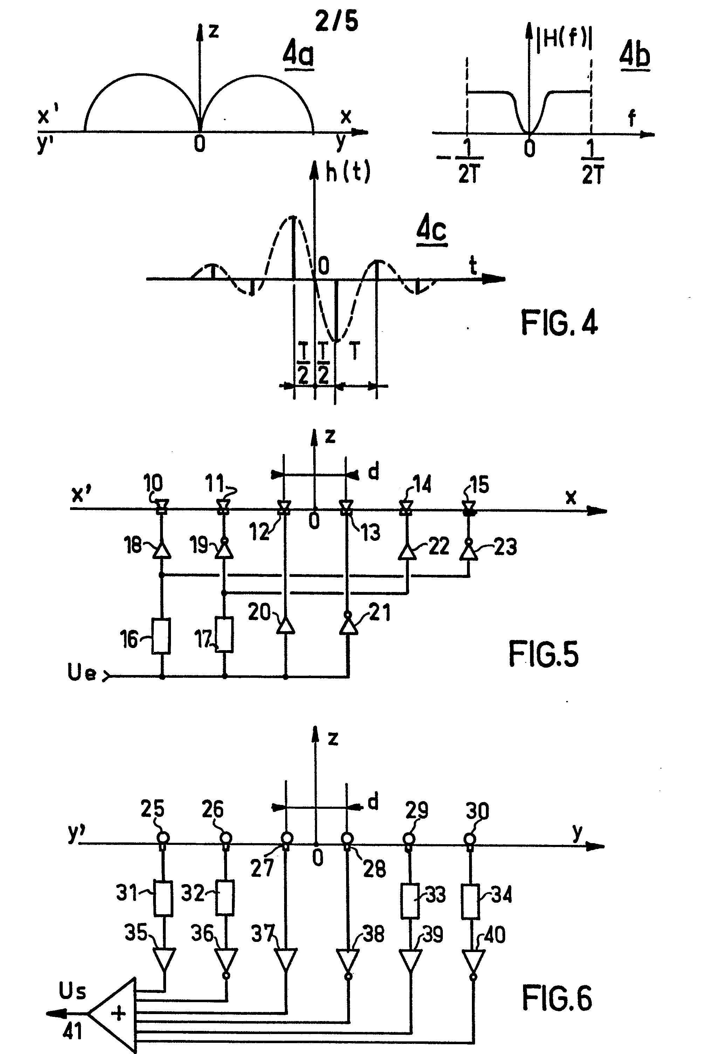

La figure 4 montre de façon pratique ces correspondances entre diagrammes de rayonnement et filtres. La figure 4a représente un diagramme de rayonnement (ou de directivité) à réaliser dans le demi-plan (Oz, x'Ox). La figure 4b montre la fonction de transfert $|H(f)|$ du filtre passe-haut qui correspond au diagramme de la figure 4a, la correspondance entre la fréquence f et l'angle α étant donnée par la relation précitée $f = \frac{\sin \alpha}{\lambda}$. Cette fonction de transfert a été représentée dans la bande de fréquence $\left[-\frac{1}{2T}, \frac{1}{2T}\right]$, $\frac{1}{T}$ étant la fréquence d'échantillonnage du filtre. Pour le filtre numérique, la fonction de transfert représentée se reproduit autour de la fréquence $\frac{1}{T}$ et ses harmoniques. A cette périodicité de la réponse du filtre dans le domaine des fréquences correspond une périodicité du diagramme de rayonnement qui se reproduit identiquement à lui- même autour des valeurs de l'angle α multiples de 360°.

En ce qui concerne la théorie et la pratique des filtres numériques, on pourra consulter l'ouvrage "Le traitement numérique du signal" par M. Bellanger, Edition Masson 1981. Pour réaliser la fonction de transfert $|H(f)|$ désirée on peut utiliser les filtres numériques à ré- ponse impulsionnelle finie, qui sont étudiés au chapitre V de cet ouvrage. Les coefficients d'un tel filtre sont définis sur la figure 4c. La courbe représentée en pointillé sur cette figure est la réponse impulsionnelle continue du filtre passe-haut ayant la fonction de transfert $|H(f)|$

de la figure 4b ; cette réponse impulsionnelle, du type antisymétrique pour un filtre passe-haut, est limitée à un intervalle de temps dans lequel est représenté un nombre pair 2P d'échantillons, séparés par l'intervalle d'échantillonnage T. Les 2P échantillons de cette réponse impulsionnelle (2P = 6 dans l'exemple représenté) sont répartis symétriquement autour du point 0 origine des temps et représentent en grandeur et en signe les coefficients à utiliser dans le filtre numérique pour réaliser la fonction de transfert de la figure 4b. On remarque que les coefficients dont la position est symétrique par rapport au point 0 ont la même amplitude et des signes contraires. De façon correspondante, pour réaliser le diagramme de rayonnement (ou de directivité) de la figure 4a, on peut utiliser un réseau de 2P transducteurs acoustiques, répartis sur une ligne comme les 2P coefficients de filtres du diagramme 4c, les signaux appliqués à (ou fournis par) ces transducteurs devant être pondérés par des coefficients correspondant aux coefficients de filtre de la figure 4c. Un tel réseau de transducteurs dont le diagramme de rayonnement correspond à un filtre passe-haut est appelé par la suite, réseau de transducteurs du premier type.

Suivant cette conception, on montre ainsi sur la figure 5 un réseau de 2P haut-parleurs permettant de réaliser le diagramme de rayonnement de la figure 4a avec des haut-parleurs supposés chacun rayonner de façon identique dans les directions telles que $- 90° \leqslant \alpha \leqslant 90°$. Ce réseau est formé de 2P haut-parleurs séparés par la distance d et répartis sur la ligne x'x symétriquement autour du centre de rayonnement 0 ; chaque haut-parleur est par exemple disposé de façon à présenter un rayonnement maximal dans la direction 0z. Dans l'exemple représenté, le réseau comprend six haut-parleurs 10 à 15. Les signaux appliqués à ces haut-parleurs sont déduits du signal électrique Ue à rayonner sous forme acoustique de façon qu'ils correspondent en amplitude et en phase à la grandeur et au signe des coefficients de filtre du diagramme 4c. En particulier les haut-parleurs disposés de façon symétrique par rapport au centre de rayonnement 0 sont à alimenter par des signaux de même amplitude et de phase opposée. Cette alimentation des haut-parleurs peut être réalisée comme le montre à titre d'exemple la figure 5, au moyen des deux circuits d'atténuation 16, 17 servant au réglage de l'amplitude des signaux et au moyen des circuits suiveurs 18, 20, 22 et des circuits inverseurs de phase 19, 21, 23.

Suivant la même conception on peut réaliser un réseau de microphones fournissant un diagramme de directivité conforme au diagramme de la figure 4a. La figure 6 montre un réseau de 2P microphones supposés présenter chacun la même directivité dans les directions telles que – 90° ≤ α ≤ 90°. Dans l'exemple représenté ce réseau comprend six microphones qui sont répartis exactement comme les six haut-parleurs sur la figure 5. Ces microphones 25 à 30 sont disposés sur une ligne y'y symétriquement par rapport au centre de directivité O. Avant d'être additionnés les signaux fournis par ces microphones doivent être pondérés par des coefficients de pondération correspondant en grandeur et en signe aux coefficients de filtre de la figure 4c. En particulier les signaux fournis par les microphones disposés symétriquement par rapport au centre de directivité O doivent être pondérés par des coefficients de même amplitude et de signes contraires. Ces opérations sur les signaux des microphones peuvent être réalisées, comme le montre à titre d'exemple la figure 6, au moyen des circuits atténuateurs 31 à 34 servant au réglage de l'amplitude des signaux, au moyen des circuits suiveurs 35, 37, 39 et inverseurs de phase 36, 38, 40 et enfin au moyen du circuit additionneur 41 qui fournit le signal de sortie $U_S$ du réseau de microphones.

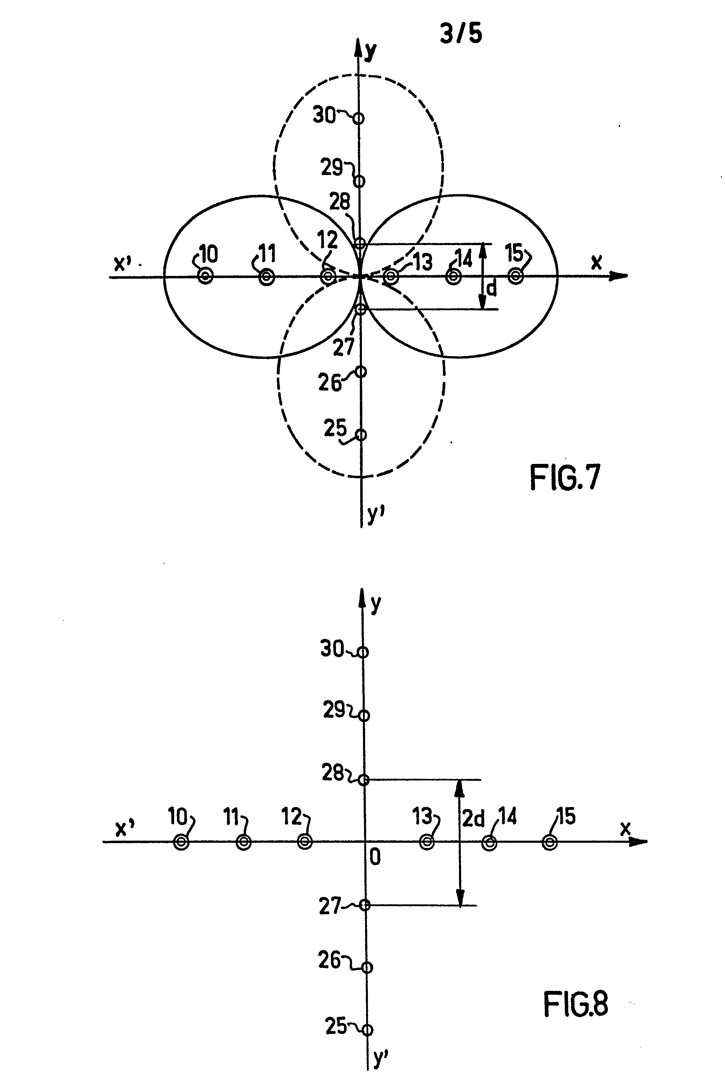

On va maintenant indiquer une disposition des deux réseaux des figures 5 et 6 comprenant chacun un nombre pair de transducteurs et permettant de supprimer les couplages direct et par réflexion de face. Cette disposition est représentée sur la figure 7. Cette figure montre, vus de face, les six haut-parleurs 10 à 15 disposés sur la ligne x'x et les six microphones 25 à 30 disposés sur la ligne y'y perpendiculaire à la ligne x'x. Les centres de rayonnement et de directivité des deux réseaux sont confondus au point O. Chaque haut-parleur et chaque microphone pris séparément présente un rayonnement maximal et une directivité maximale dans la direction Oz perpendiculaire au plan formé par les deux lignes x'x et y'y. Mais d'après le diagramme de la figure 4a, dans cette direction Oz le rayonnement du réseau de haut-parleurs et la directivité du réseau de microphones sont nuls ; il en résulte pratiquement la suppression du couplage par réflexion de face entre les deux réseaux de transducteurs. Dans chaque plan contenant la ligne x'x ou la ligne y'y, on a également une direction passant par le point O suivant laquelle le rayonnement est nul ou la directivité est nulle, ce qui contribue également à réduire les couplages entre les deux réseaux. Enfin, dans le plan défini par les lignes x'x et y'y, le diagramme de rayonnement du réseau de haut-parleurs présente la forme représentée par la courbe en trait continu sur la figure 7 ; ce diagramme symétrique par rapport à la ligne x'x a de chaque côté de cette ligne la forme du diagramme de la figure 4a. Le diagramme de directivité du réseau de microphones présente la forme représentée par la courbe en traits pointillés ; ce diagramme de directivité symétrique par rapport à la ligne y'y a la même forme que le diagramme de rayonnement. Le tracé de ces deux diagrammes montre clairement que dans le plan (x'x, y'y) le rayonnement du réseau de haut-parleurs est nul dans les deux directions opposées Oy, Oy' où la directivité du réseau de microphones est maximale et inversement la directivité du réseau de microphones est nulle dans les deux directions opposées Ox, Ox' où le rayonnement du réseau de haut-parleurs est maximal. Il en résulte pratiquement la suppression des couplages directs entre les deux réseaux de transducteurs.

La théorie des filtres numériques suggère une variante un peu différente pour la réalisation de réseaux de transducteurs procurant un diagramme du genre montré à la figure 4a. On sait que l'on peut réaliser un filtre passe-haut ayant la fonction de transfert $|H(f)|$ de la figure 4b et la réponse impulsionnelle h(t) de la figure 4c, au moyen d'un filtre numérique ayant un coefficient central nul et un nombre pair de coefficients également répartis autour de ce coefficient central. On en déduit la disposition des deux réseaux de haut-parleurs et de microphones montrée à la figure 8 ; cette disposition diffère de celle de la figure 7 par le fait que les deux transducteurs les plus proches du centre O dans chaque réseau sont à la distance 2d l'un de l'autre, au lieu de d. Les schémas électriques associés à ces transducteurs restent ceux des figures 5 et 6 ; mais pour obtenir exactement les mêmes diagrammes de rayonnement et de directivité dans les deux variantes des figures 7 et 8, les amplitudes des signaux doivent être réglées à des valeurs différentes.

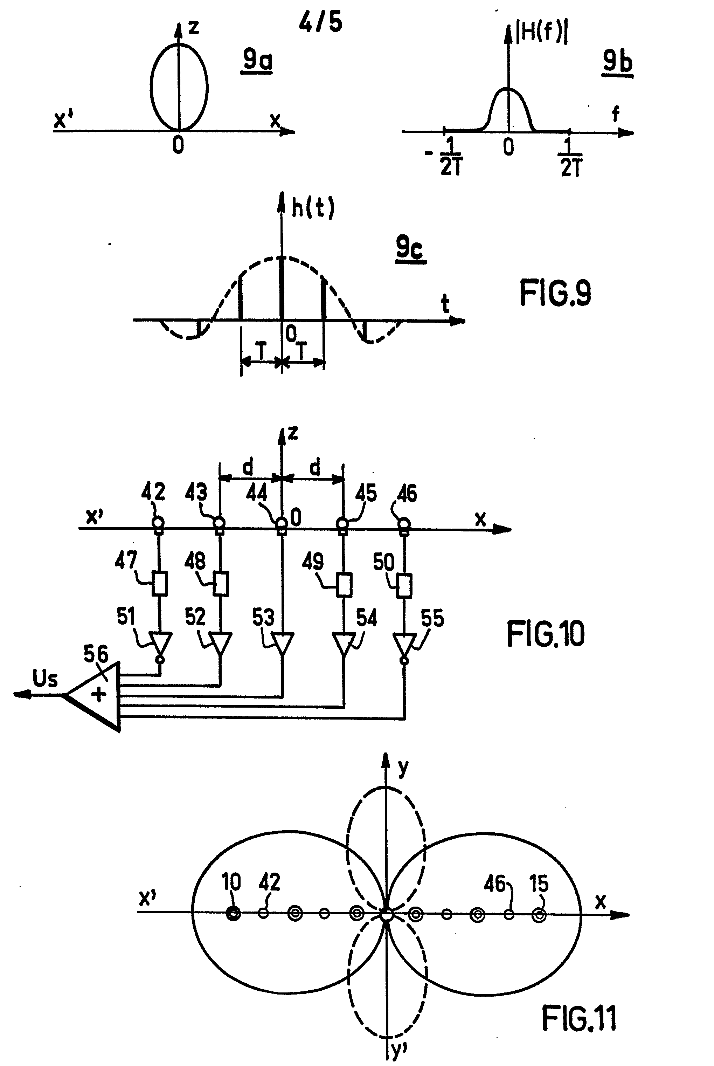

On peut réaliser un deuxième type de réseaux de transducteurs alignés, que l'on va décrire au moyen de la figure 9, en utilisant la correspondance avec les filtres numériques. La figure 9a montre le diagramme de rayonnement de ce deuxième type de réseau. Ce diagramme correspond à la fonction de transfert $|H(f)|$ qui est montrée sur la figure 9b et qui est celle d'un filtre passe-bas. Ce filtre passe-bas a la réponse impulsionnelle h(t) représentée par la courbe en trait pointillé sur la figure 9c. Cette réponse impulsionnelle, du type symétrique pour un filtre passe-bas, est limitée à un intervalle de temps dans lequel est représenté un nombre impair (2P + 1) d'échantillons, séparés par l'intervalle d'échantillonnage T. Ces 2P + 1 échantillons (2P = 5 dans l'exemple représenté) sont répartis symétriquement autour du point O origine des temps et représentent en grandeur et en signe les coefficients à utiliser dans le filtre numérique pour réaliser la fonction de transfert de la figure 9b. On remarque que les coefficients dont la position est symétrique par rapport au point O ont la même amplitude et la même phase. De façon correspondante, pour réaliser le diagramme de rayonnement (ou de directivité) de la figure 9a, on peut utiliser un réseau de 2P + 1 transducteurs acoustiques répartis sur une ligne, les signaux appliqués (ou fournis par) ces transducteurs devant être pondérés par des coefficients correspondant aux coefficients de filtre de la figure 9c.

On peut par exemple réaliser, suivant cette conception, un réseau de 2P + 1 = 5 microphones, comme le montre la figure 10. Ce réseau, destiné à réaliser le diagramme de directivité de la figure 9a, comprend les cinq microphones 42 à 46 disposés sur la ligne x'x, symétriquement par rapport au centre de directivité O. Ces microphones sont séparés par la distance d et ont par exemple chacun leur directivité maximale dans la direction Oz. Avant d'être additionnés, les signaux fournis par ces microphones sont pondérés par des coefficients de pondération correspondant aux coefficients de filtres de la figure 9c. Ces opérations sur les signaux des microphones peuvent être réalisées, comme le montre à titre d'exemple la figure 10, au moyen des circuits atténuateurs 47 à 50, au moyen des circuits inverseurs 51, 55 et suiveurs 52, 53, 54 et enfin au moyen du circuit additionneur 56 qui fournit le signal de sortie $U_s$ du réseau de microphones.

On pourrait réaliser aussi suivant la même conception un réseau à nombre impair 2P + 1 de haut-parleurs, ayant le diagramme de rayonnement du type de la figure 9a. Enfin ce diagramme de rayonnement (ou de directivité) pourrait aussi être réalisé par un réseau à nombre pair de transducteurs répartis symétriquement par rapport au point O.

La figure 11 montre une disposition de deux réseaux de transducteurs, l'un du type de la figure 5 et l'autre du type de la figure 10. Suivant cette disposition les deux réseaux ont leurs transducteurs disposés sur la même ligne, avec de préférence les centres de rayonnement

et de directivité confondus. La figure 11 représente dans le plan (x'x, y'y) perpendiculaire à l'axe Oz, les six haut-parleurs 10 à 15 et les cinq microphones 42 à 46 alignés sur la ligne x'x et disposés symétriquement par rapport au centre O. Les haut-parleurs et les microphones étant associés aux circuits électriques représentés aux figures 5 et 10, le réseau de haut-parleurs présente dans le demi-plan (Oz, x'Ox) le diagramme de rayonnement de la figure 4a et le réseau de microphones présente dans le même demi-plan le diagramme de directivité de la figure 9a. On voit aisément qu'il en résulte la suppression du couplage par réflexion de face entre les deux réseaux de transducteurs. Dans le plan (x'Ox, y'Oy), le diagramme de rayonnement du réseau de haut-parleurs présente la forme de la courbe en trait continu sur la figure 11 et le diagramme de directivité du réseau de microphones présente la forme de la courbe en trait pointillé. On voit aisément qu'il en résulte la suppression du couplage direct entre les deux réseaux de transducteurs.

Dans une variante de la disposition de la figure 11, on pourrait utiliser un nombre impair de haut-parleurs et un nombre pair de microphones pour obtenir des caractéristiques analogues. Dans une autre variante on pourrait aussi utiliser un nombre pair de haut-parleurs pour former un réseau du premier type et un nombre pair de microphones pour former un réseau du deuxième type ; la distance entre les deux transducteurs les plus proches du point O doit alors être 2d pour le réseau de haut-parleurs et d pour le réseau de microphones.

En ce qui concerne la distance d, définissant l'intervalle entre les transducteurs de chaque réseau, elle est choisie de préférence de façon que le rapport $\frac{d}{\lambda}$ soit inférieur à 1, $\lambda$ étant la longueur d'onde des vibrations acoustiques.

Comme on l'a déjà remarqué, les diagrammes de rayonnement et de directivité se déforment avec la fréquence ou la longueur d'onde $\lambda$ des vibrations acoustiques. Pour qu'entre les deux réseaux de transducteurs la suppression des couplages intempestifs soit maintenue dans une large gamme de fréquences (par exemple 300-3400 Hz), il importe que les diagrammes conservent dans toute cette gamme, malgré leurs déformations, les mêmes directions de rayonnement nul et de directivité nulle. Cette exigence est entièrement satisfaite avec les réseaux de transducteurs du premier type décrit aux figures 5 et 6, ayant un diagramme de rayonnement ou de directivité correspondant à un filtre passe-haut. Par contre, avec les réseaux de transducteurs du deuxième type de la figure 10, ayant un diagramme de rayonnement ou de directivité correspondant à un filtre passe-bas, le rayonnement ou la directivité ne sont rigoureusement nuls que pour une seule fréquence des vibrations acoustiques. Il en résulte que, pour maintenir le découplage acoustique dans une large gamme de fréquences, une disposition des deux réseaux de transducteurs telle que celle des figures 7 ou 8 est plus avantageuse que celle de la figure 11.

Les dispositions de réseaux de transducteurs des figures 7, 8 et 11 sont des modes de réalisation particuliers de l'invention. Plus généralement, pour parfaire la répartition du rayonnement et de la directivité dans l'espace et améliorer le découplage entre deux réseaux de transducteurs, il peut être intéressant de disposer ces transducteurs d'une autre manière sur un plan, ou dans l'espace à trois dimensions. Par exemple, on pourrait disposer dans un plan plusieurs paires de réseaux de transducteurs conformes chacun aux paires de réseaux des figures 7, 8 ou 9, ces paires de réseaux ayant de préférence le même centre O. En particulier on pourrait disposer deux paires de réseaux conformes chacun à la figure 11, sur deux lignes qui devraient être de préférence perpendiculaires.

La correspondance entre la fonction de transfert d'un filtre et les diagrammes de rayonnement ou de directivité indique que, de la même manière que l'on peut modifier la fonction de transfert $|H(f)|$ par le nombre et la valeur des coefficients du filtre numérique, on peut de même modifier les diagrammes de rayonnement et de directivité de façon à obtenir le découplage souhaité, par le nombre de haut-parleurs et de microphones et par la valeur des coefficients de pondération des signaux appliqués à (ou fournis par) ces transducteurs. En particulier, par la formule $f = \dfrac{\sin \alpha}{\lambda}$ on peut faire correspondre à la fréquence de coupure $f_c$ et à la bande de transition $\Delta f$ d'un filtre passe-haut ou passe-bas, un angle de coupure $\alpha_c$ et un secteur de transition $\Delta \alpha$ pour les diagrammes de rayonnement et de directivité. De la même manière que l'on diminue la bande de transition $\Delta f$ d'un filtre en augmentant le nombre de ses coefficients, on diminue le secteur de transition $\Delta \alpha$ en augmentant le nombre de haut-parleurs et de microphones des deux réseaux, ce qui tend à améliorer le découplage entre les deux réseaux de transducteurs.

Dans beaucoup de cas toutefois, il n'est pas nécessaire que les réseaux comportent un nombre de transducteurs très grand pour obtenir un découplage suffisant, d'autant plus que l'on peut bénéficier de la forme favorable des diagrammes de chaque transducteur, qui ont été supposés jusqu'à présent parfaitement omnidirectionnels.

On peut par exemple utiliser des réseaux à deux transducteurs qui sont la version la plus simple des réseaux du premier type définis aux figures 5 et 6. Ces réseaux à deux transducteurs ont un diagramme de rayonnement ou de directivité qui correspond à un filtre passe-haut dont la fonction de transfert est $|H(f)| = |\sin \Pi fT|$. On en déduit que le diagramme de rayonnement ou de directivité répond à l'expression :

$$\left|\rho(\alpha)\right| = \left|\sin\left[\Pi \frac{d}{\lambda} \sin \alpha\right]\right| \qquad (1)$$

Dans un réseau de ce type comportant deux haut-parleurs, ces derniers sont alimentés par des signaux de même amplitude et de phases opposées. Dans un réseau de ce type comportant deux microphones, on inverse la phase du signal fourni par un microphone et on additionne ce signal à phase inversée au signal fourni par l'autre microphone. Ce réseau à deux transducteurs présente l'avantage déjà mentionné pour les réseaux du premier type, à savoir qu'il existe une direction invariable avec la longueur $\lambda$ des vibrations acoustiques, pour laquelle le rayonnement ou la directivité s'annule.

On peut aussi utiliser des réseaux à trois transducteurs alignés qui sont une version simple des réseaux du deuxième type défini à la figure 10. Ces réseaux à trois transducteurs ont un diagramme de rayonnement ou de directivité qui correspond à un filtre passe-bas dont la fonction de transfert est par exemple du type en cosinus surélevé et répond à l'expression $|H(f)| = \frac{1}{2}\left|1 + \cos 2\Pi fT\right|$. On en déduit que le diagramme de rayonnement ou de directivité répond à l'expression :

$$\left|\rho(\alpha)\right| = \frac{1}{2}\left|1 + \cos\left[2\Pi \frac{d}{\lambda} \sin \alpha\right]\right| \qquad (2)$$

Dans un réseau de ce type comportant trois haut-parleurs alignés, les trois haut-parleurs sont alimentés par des signaux de même phase, l'amplitude des signaux alimentant les deux haut-parleurs extrêmes étant la moitié de celle du signal alimentant le haut-parleur central.

Dans un réseau de ce type comportant trois microphones alignés, les signaux fournis par les deux microphones extrêmes sont réduits de moitié, puis additionnés au signal fourni par le microphone central. Ce réseau à trois transducteurs présente l'inconvénient déjà mentionné pour les réseaux du deuxième type, à savoir que la direction pour laquelle le rayonnement ou la directivité s'annule n'est définie que pour une longueur d'onde λ des vibrations acoustiques.

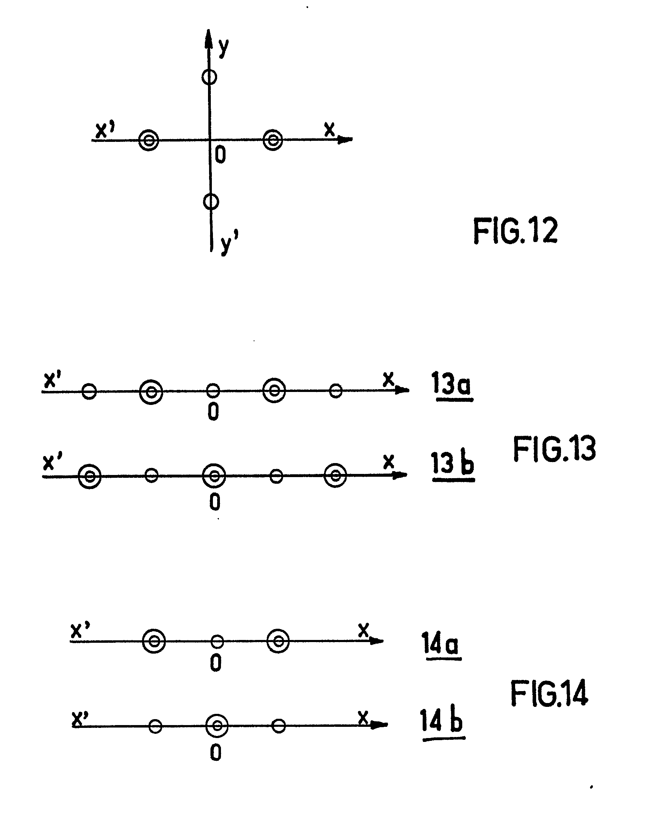

Les figures 12, 13, 14 montrent des arrangements utilisant ces types de réseaux simples pour supprimer des couplages acoustiques. La figure 12 montre un réseau de deux haut-parleurs sur la ligne x'Ox et un réseau de deux microphones sur la ligne perpendiculaire y'Oy. Les diagrammes de rayonnement et de directivité dans le plan xOy sont du genre représenté sur la figure 7 et plus précisément répondent à l'expression (1) ci-dessus. Cet arrangement a l'avantage de procurer des directions de directivité et de rayonnement nulles, indépendantes de la longueur d'onde λ des vibrations acoustiques.

La figure 13 montre en 13a un réseau de deux haut-parleurs aligné avec un réseau de trois microphones sur la ligne x'Ox. Les diagrammes de rayonnement et de directivité dans le plan xOy sont du genre représenté à la figure 11 ; plus précisément le diagramme de rayonnement du réseau de deux haut-parleurs répond à l'expression (1) et le diagramme de directivité du réseau des trois microphones répond par exemple à l'expression (2) ci-dessus. En 13b est représenté l'arrangement inverse dans lequel on utilise un réseau de trois haut-parleurs et un réseau de deux microphones.

La figure 14 montre les deux arrangements les plus simples : en 14a un microphone est associé à deux haut-parleurs, en 14b un haut-parleur est associé à deux microphones.

Les arrangements simples que montrent les figures 12, 13, 14 peuvent être utilisés par exemple dans un poste téléphonique "mains libres" en combinaison éventuellement avec des dispositifs très simplifiés permettant de réduire le couplage électrique. Pour respecter la condition $\frac{d}{\lambda} < 1$ dans la bande des fréquences (300-3400 Hz), on peut choisir par exemple d = 5 cm, d étant la distance entre transducteurs dans un réseau.

REVENDICATIONS :

1.        Agencement d'un émetteur et d'un récepteur d'ondes acoustiques couplés par voie électrique, cet agencement destiné à empêcher la
naissance d'oscillations par couplage acoustique étant caractérisé en ce
que cet émetteur et ce récepteur sont constitués par deux réseaux de
transducteurs acoustiques, la disposition des transducteurs dans chaque
réseau, la phase et l'amplitude des signaux fournis aux transducteurs
(10) à (15) du réseau de l'émetteur et des signaux fournis à un circuit
additionneur (41) en provenance des transducteurs (25) à (30) du réseau
du récepteur étant déterminées pour que, dans la bande de fréquences où
les oscillations sont susceptibles de se produire, le rayonnement du réseau de l'émetteur et la directivité du réseau du récepteur présentent
chacun une valeur minimale sensiblement nulle au moins dans une direction, la disposition des deux réseaux l'un par rapport à l'autre étant
telle que les directions de valeur minimale de rayonnement et de directivité correspondent sensiblement aux directions des couplages les plus
importants entre les transducteurs des deux réseaux.

2.        Agencement selon la revendication 1, caractérisé en ce
que la disposition des deux réseaux l'un par rapport à l'autre est telle
que le centre de rayonnement du réseau de l'émetteur est sensiblement
confondu avec le centre de directivité du réseau du récepteur.

3.        Agencement selon l'une des revendications 1 ou 2, caractérisé en ce que le premier des deux réseaux est constitué par un nombre
pair de transducteurs d'un type (haut-parleurs ou microphones), disposés
sur une ligne x'x, symétriquement par rapport à un point O, les transducteurs situés d'un même côté du point O étant séparés par la distance d,
les signaux appliqués aux transducteurs (ou fournis par les transducteurs) étant pondérés à l'aide de circuits de pondération, de telle façon que le rayonnement (ou la directivité) du réseau de transducteurs
soit nul dans les directions de lignes passant par le point O et perpendiculaires à la ligne x'x.

4.        Agencement selon la revendication 3, caractérisé en ce
que les deux transducteurs les plus proches du point O sur la ligne x'x
sont séparés par la distance d ou la distance 2d.

5.        Agencement selon l'une des revendications 3 ou 4, caractérisé en ce que les circuits de pondération des signaux des transducteurs disposés sur la ligne x'x sont agencés pour que les transducteurs symétriques par rapport au point O sur cette ligne reçoivent (ou fournissent) des signaux de même amplitude et de phases opposées.

6.      Agencement selon l'une des revendications 3 à 5, caractérisé en ce que le deuxième réseau est constitué par un nombre pair de transducteurs de l'autre type, disposés symétriquement par rapport audit point O sur une ligne y'y perpendiculaire à ladite ligne x'x, les transducteurs situés d'un même côté du point O étant séparés par la distance d, les signaux appliqués aux transducteurs (ou fournis par les transducteurs) étant pondérés à l'aide de circuits de pondération de telle façon que le rayonnement (ou la directivité) du réseau de transducteurs disposés sur la ligne y'y soit nul dans les directions de lignes passant par le point O et perpendiculaires à la ligne y'y.

7.      Agencement selon la revendication 6, caractérisé en ce que les deux transducteurs les plus proches du point O sur la ligne y'y sont séparés par la distance d ou la distance 2d.

8.      Agencement selon l'une des revendications 6 ou 7, caractérisé en ce que les circuits de pondération des signaux des transducteurs disposés sur la ligne y'y sont agencés pour que les transducteurs symétriques par rapport au point O sur cette ligne reçoivent (ou fournissent) des signaux de même amplitude et de phases opposées.

9.      Agencement selon l'une des revendications 3 à 5 et dans lequel les deux transducteurs du premier réseau les plus proches du point O sont à la distance d (ou à la distance 2d), caractérisé en ce que le deuxième réseau est constitué par un nombre impair (ou un nombre pair) de transducteurs de l'autre type, disposés symétriquement par rapport audit point O sur la ligne x'x formée par le premier réseau, les transducteurs de ce deuxième réseau étant séparés par la distance d, les signaux appliqués à ces transducteurs (ou fournis par ces transducteurs) étant pondérés par des circuits de pondération de telle façon que le rayonnement (ou la directivité) du deuxième réseau de transducteurs disposés sur la ligne x'x soit nul dans les directions de lignes passant par le point O et perpendiculaires à la ligne y'y.

10.      Agencement selon la revendication 9, caractérisé en ce que les circuits de pondération des signaux des transducteurs du deuxième réseau disposés sur la ligne x'x sont agencés pour que les transducteurs symétriques par rapport au point O sur cette ligne reçoivent (ou fournissent) des signaux de même amplitude et de même phase.

11.     Agencement selon l'une des revendications 6 à 8, caractérisé en ce que le premier réseau est formé de deux haut-parleurs disposés sur une ligne x'x symétriquement par rapport à un point O et le deuxième réseau est formé de deux microphones disposés symétriquement par rapport audit point O sur une ligne y'y perpendiculaire à la ligne x'x, les deux haut-parleurs recevant des signaux de même amplitude et de phases opposées, les deux microphones fournissant à un circuit additionneur des signaux de même amplitude et de phases opposées.

12.     Agencement selon l'une des revendications 9 ou 10, caractérisé en ce que le premier réseau est formé de deux haut-parleurs disposés sur une ligne x'x symétriquement par rapport à un point O et le deuxième réseau est formé de trois microphones disposés sur ladite ligne x'x symétriquement par rapport au point O, les deux haut-parleurs recevant des signaux de même amplitude et de phases opposées, les deux microphones extrêmes fournissant à un circuit additionneur des signaux d'amplitude moitié de l'amplitude du signal fourni par le microphone central et de même phase.

13.     Agencement selon l'une des revendications 9 ou 10, caractérisé en ce que le premier réseau est formé de deux microphones disposés sur une ligne x'x symétriquement par rapport à un point O et le deuxième réseau est formé de trois haut-parleurs disposés sur ladite ligne x'x symétriquement par rapport au point O, les deux microphones fournissant à un circuit additionneur des signaux de même amplitude et de phases opposées, les deux haut-parleurs extrêmes recevant des signaux d'amplitude moitié de l'amplitude du signal reçu par le haut-parleur central et de même phase.

14.     Agencement selon la revendication 9 ou 10, caractérisé en ce qu'il est formé de deux haut-parleurs alignés avec un microphone central, les deux haut-parleurs recevant des signaux de même amplitude et de phases opposées.

15.     Agencement selon la revendication 9 ou 10, caractérisé en ce qu'il est formé de deux microphones alignés avec un haut-parleur central, les deux microphones fournissant à un circuit additionneur des signaux de même amplitude et de phases opposées.

16.     Agencement selon l'une des revendications 3 à 15, caractérisé en ce que la distance d est choisie de façon que le rapport $\frac{d}{\lambda}$ soit inférieur à 1, $\lambda$ étant la longueur d'ondes des vibrations acoustiques.

17.     Poste téléphonique "mains libres" utilisant l'agencement selon l'une des revendications 1 à 16.

FIG.1

FIG.2

FIG.3

0061812

FIG. 4

FIG.5

FIG.6

FIG.7

FIG.8

0061812

FIG.9

FIG.10

FIG.11

FIG.12

13a

FIG.13

13 b

14a

FIG.14

14 b

**RAPPORT DE RECHERCHE EUROPEENNE**

Office européen
des brevets

EP 82 20 0360

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US - A - 3 992 586 (JAFFE) <br> * Colonne 3, ligne 10 - colonne 5, ligne 27; figures * <br> -- | 1,2,5 | H 04 M 9/08 |
| A | DE - A - 2 640 324 (KOCK) <br> * Page 5, ligne 1 - page 8, ligne 8; figures * <br> -- | 1-3,5, 9,10, 15 | |
| A | DE - A - 1 512 709 (JUPITER) <br> * Page 10, ligne 10 - page 14, ligne 20; figures 3-5 * <br> ---- | 1-3,5, 9,10, 15,17 | |

|  | DOMAINES TECHNIQUES RECHERCHES (Int. Cl. ³) |
|---|---|
|  | H 04 M 9/08 <br>　　　　 9/10 <br> H 04 R 3/02 <br>　　　　 27/00 |

Le présent rapport de recherche a été établi pour toutes les revendications

| Lieu de la recherche | Date d'achèvement de la recherche | Examinateur |
|---|---|---|
| La Haye | 01-07-1982 | KEPPENS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82